# EUROPEAN PATENT APPLICATION

(11) **EP 4 353 359 A1**
(43) Date of publication of application: **17.04.2024**
(21) Application number: 22201369.0
(22) Date of filing: 13.10.2022
(51) Int. Cl.: B01L 3/02, G01N 35/10

(54) **A LIQUID HANDLING DEVICE, AND USE OF A HOLLOW PLUNGER**

(71) Applicant: Sartorius Biohit Liquid Handling Oy, 00880 Helsinki (FI)
(72) Inventor: VIHINEN, Pasi, 00710 Helsinki (FI)
(74) Representative: Laine IP Oy

(57) **Abstract**

According to an example aspect of the present invention, there is provided a liquid handling device based on air displacement principle, comprising a cavity comprising a first chamber and a second chamber, a plunger movable inside the cavity, to apply a vacuum or pressure inside the cavity, wherein the first chamber is configured to provide a first dosing volume range, wherein the second chamber together with the first chamber is configured to provide a second dosing volume range, which is larger than the first dosing volume range, wherein said first chamber and said second chamber are connected by a closable fluid connection, and wherein said fluid connection is provided through said plunger.

## Description

### FIELD

The present invention relates to liquid handling devices operated according to air displacement principle.

### BACKGROUND

An air displacement pipette generally comprises a cylinder-formed cavity and a plunger arranged to move within the cavity. The plunger may be actuated either manually by a user or automatically by an electric motor. When the plunger is moving upwards inside the cylinder, liquid is being aspirated into a tip attached to a lower part or the cylinder, to its open end. When the plunger is moving downwards, liquid is being pushed out of the tip.

In conventional air displacement pipettes, the dosing volume range that is available for aspirating and dispensing is determined by the dimensions of the cylinder and the plunger of the pipette, particularly the diameter and length of the cylinder and the plunger, and the plunger stroke length. Conventionally there is only a single volume range available and it cannot be altered, such as enlarged or reduced. Within the volume range, it is possible to select the desired dosing volume for a particular pipetting action by adjusting the plunger stroke length, i.e. the plunger travel distance. When the stroke length has been set to its shortest value, the minimum volume within the volume range is available for use. Vice versa, when the stroke length has been set to its longest value, the maximum dosing volume within the volume range is available for use.

Generally, accuracy of large-volume pipettes is restricted when using volumes in the lower part of their volume range. Therefore, a minimum dosing volume is always specified.

There are also fixed-volume air displacement pipettes in which the plunger stroke length cannot be adjusted. Such pipettes do not provide any volume range but a fixed dosing volume.

The present invention intends to solve at least some of the problems present in known air displacement pipettes.

### SUMMARY OF THE INVENTION

The invention is defined by the features of the independent claims. Some specific embodiments are defined in the dependent claims.

According to a first aspect of the present invention, there is provided a liquid handling device based on air displacement principle, comprising a cavity comprising a first chamber and a second chamber, a plunger movable inside the cavity, to apply a vacuum or pressure inside the cavity, wherein the first chamber is configured to provide a first dosing volume range, wherein the second chamber together with the first chamber is configured to provide a second dosing volume range, which is larger than the first dosing volume range, wherein said first chamber and said second chamber are connected by a closable fluid connection, and wherein said fluid connection is provided through said plunger.

According to a second aspect of the present invention, there is provided a liquid handling device, comprising a cavity comprising a first chamber and a second chamber, the first chamber having a first volume and the second chamber having a second volume larger than the first volume, a plunger configured to move inside the cavity in order to apply a vacuum or a pressure inside said cavity, thereby to aspirate or respectively dispense liquid into/from a tip attached to a lower open end of the cavity, wherein said first chamber and said second chamber are connected by a closable fluid connection.

According to a third aspect of the present invention, there is provided use of a hollow plunger in an air displacement liquid handling device to function as a fluid connection between two parts of a cavity inside which the plunger is configured to move, wherein the fluid connection is configured to be closable to reduce the volume range of the liquid handling device.

Various embodiments of the first aspect or the second aspect or the third aspect may comprise one or more features from the following bulleted list:
- The first dosing volume range or the first dosing volume is configured to be available for use when the fluid connection is closed.
- The second dosing volume range or the second dosing volume is configured to be available for use when the fluid connection is open.
- The cavity consists of a first chamber and a second chamber.
- The cavity comprises an open lower end configured to hold a tip, such as a disposable tip, for example a plastic disposable tip, for receiving liquid.
- The first chamber is substantially cylinder-shaped.
- The second chamber is substantially cylinder-shaped.
- The second chamber has a larger diameter than the first chamber.
- The plunger is sealed against inner surfaces of the cavity, typically against inner surface of both chambers.
- The plunger is sealed against inner surfaces of the second chamber via a flange arranged around the circumference of the plunger.
- Said plunger is hollow for at least a part of its length.
- Said plunger is hollow for its entire length.
- Said hollow part or hollow plunger provides said closable fluid connection between the first and the second chamber, or at least a part of said closable fluid connection.
- At least a part of the length of the plunger, preferably the entire length of the plunger, from its lower end upwards, is hollow.
- The fluid connection comprises a channel extending inside the plunger from its lower end up to an opening in a lateral wall of the plunger, as a result of which preferably the plunger is hollow for at least the respective part of its length.
- The liquid handling device comprises a closure mechanism configured to open and close the closable fluid connection, particularly to open and close said opening in the lateral wall of the plunger.
- The closure mechanism comprises a rod or a bar inside the hollow part of the plunger.
- The rod is movable, typically in a vertical direction, within the hollow part to open and close the fluid connection, particularly to open and close said opening.
- The closure mechanism is actuated by an electric motor, such as a solenoid motor.
- The liquid handling device is an air-displacement pipette.
- The liquid handling device is an air-displacement pipette having a fixed plunger stroke length.
- The liquid handling device is an air-displacement pipette having an adjustable plunger stroke length.
- The liquid handling device is a hand-held pipette, preferably a hand-held air displacement pipette.
- The liquid handling device is an automated liquid handling station.
- The liquid handling device is a single-channel or a multi-channel liquid handling device.
- Said fluid connection is provided through said plunger.

### Advantages of the invention

The present invention may provide a facile way of having two alternative, typically different, volume ranges in a single pipette.

The present invention may be particularly advantageous in manual hand-held pipettes, because the implementation is space-saving. Two volume ranges may be provided without affecting the outer dimensions of the pipette.

Additionally, the present invention may enable execution of several pipetting steps with substantially different dispensing volumes as the present pipette now provides two volume ranges for the user. Changes from using one pipette to using another pipette, with a different volume range, in the middle of a dispensing sequence may be avoided.

### BRIEF DESCRIPTION OF THE DRAWINGS

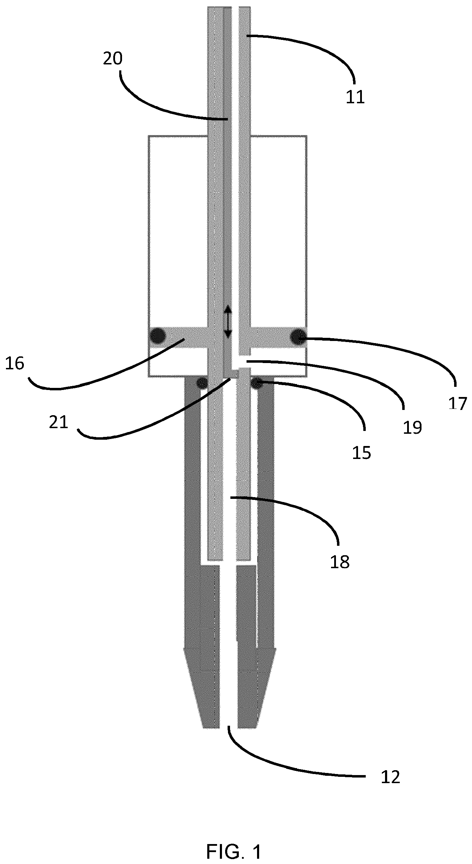

FIGURES 1 to 4 illustrate a liquid aspirating and dispensing head or pipette in accordance with an embodiment of the present invention.

### EMBODIMENTS

### DEFINITIONS

In the present context, the term "liquid handling device" typically comprises a device configured to aspirate and dispense liquid, typically in doses smaller than 20 ml.

In the present context, the term "pipette" typically comprises a hand-held liquid dispensing device, for example a mechanical pipette or an electronic pipette. It may also refer to a pipetting head in an automated liquid handling robot or station.

In the present context, the term "fluid" typically refers to air.

In the present context, the term "plunger" is synonymous with the term "piston".

In the present context, the term "plunger stroke length" is synonymous with the terms "plunger travel length" and "plunger travel distance".

In the present context, the expression "connected by a fluid connection" typically refers to being connected by a channel for conducting fluid, such as air. The term "fluid connection" typically refers to an air connection or a pressure channel.

The present invention preferably relates to air displacement pipettes or dispensers in which a plunger is movable inside a cavity in order to apply a vacuum or pressure inside the cavity and thereby to aspirate or respectively dispense liquid into/from a tip attached to a lower open end of the cavity.

In the present context, the term "volume range" typically refers to a dosing volume range of a pipette, i.e. the range of liquid volumes that the pipette is configured to aspirate and dispense by means of moving the plunger inside the cavity over the plunger travel distance, which is adjustable.

Some embodiments of the present invention may be applicable to air-displacement pipettes having an adjustable plunger stroke length. Said adjustment makes it possible to have a range of dosing volumes available.

Some embodiments of the present invention may be applicable to air-displacement pipettes having a fixed plunger stroke length.

It has been observed that in the case of a pipette with an adjustable plunger stroke length, alternative dosing volume ranges may be provided to a single pipette or liquid handling device by means of the present new chamber structure.

It has also been observed that in the case of a pipette with a fixed plunger stroke length, alternative fixed dosing volumes may be provided to a single pipette or liquid handling device by means of the present new chamber structure.

An embodiment provides a liquid handling device based on air displacement principle, comprising a cavity comprising or consisting of a first chamber and a second chamber, and a plunger movable inside the cavity, to apply a vacuum or pressure inside the cavity. The movement of the plunger typically displaces air inside the cavity and effects aspirating and dispensing of liquid into and respectively from a tip that is attached to an end of the cavity. Said end of the cavity is the lower open end of the cavity.

The cavity usually consists of or comprises two discrete parts, each with its own volume or capacity to hold air. The parts are connectable to form a single combined volume.

The first chamber is configured to provide a first dosing volume range, such as when used alone, without any air connection to the second chamber.

The second chamber is typically not used alone but only in combination or together with the first chamber so that their individual volumes form a single unified volume. Said combined volume provides a second dosing volume range, which is larger than the first dosing volume range.

Within each volume range, the user may set the desired dosing volume for a particular pipetting action conventionally, by adjusting the plunger stroke length.

Said first chamber and said second chamber are typically connected by a closable fluid connection. Preferably, the fluid connection may be opened or closed when needed, when carrying out pipetting tasks with the pipette, in order to change from a smaller volume range to a larger one, or vice versa respectively. Consequently, change of the tip to a larger-volume tip or respectively to a smaller-volume tip may become relevant.

In some embodiments, said fluid connection is provided through said plunger. For example, a closable channel through at least a part of the length of the plunger may function as the closable fluid connection.

In some embodiments, said fluid connection comprises a closable hose or tubing.

In an embodiment, the first dosing volume range is configured to be available for use when the fluid connection is in a closed state.

When the fluid connection between the first and the second chambers is closed, preferably there is provided a channel for directing air out from the upper part of the second chamber, from above the flange. When the fluid connection is open and the second chamber in use, said channel for directing air out from the upper part of the second chamber from above the flange is closed.

In an embodiment, the second dosing volume range is configured to be available for use when the fluid connection is open.

In an embodiment, the cavity comprises an open lower end configured to hold a tip for receiving liquid, such as a disposable plastic tip.

Preferably, the first chamber and the second chamber are cylinder-shaped. They may also have any other suitable shape, for example in order to conform to the outer dimensions of the liquid handling device, such as the shape of the body of the liquid handling device.

In some embodiments, the second chamber has a larger diameter than the first chamber. The second chamber may have a smaller height than the first chamber.

Preferably, the height of the first chamber is equal to or larger than the plunger stroke length.

Preferably, the height of the second chamber is equal to or larger than the plunger stroke length.

The plunger is typically sealed against inner surfaces of the cavity, typically at determined locations along the height of the cavity.

The plunger may be sealed against inner surface of the second chamber via a flange arranged around the circumference of the plunger, such as by providing a sealing between an outer edge of the flange and inner surface of the second chamber.

In an embodiment, said plunger is hollow for at least a part of its length, and said hollow part typically provides said closable fluid connection between the first and the second chamber, or at least a part of it.

A part, such as at least 10%, such as at least 20%, such as at least 30%, such as at least 40%, such as at least 80% of the length of the plunger, from its lower end upwards, may be hollow.

The entire plunger may be hollow.

In an embodiment, the fluid connection comprises a channel extending inside the plunger from its lower end up to an opening in its lateral wall, as a result of which the plunger is hollow for at least the respective part of its length.

The liquid handling device may comprise a closure mechanism configured to open and close the closable fluid connection, particularly to open and close said opening in the lateral wall of the plunger.

For example, the closure mechanism may comprise a rod or a bar inside the hollow part of the plunger, wherein the rod is movable within the hollow part to open and close the fluid connection.

The closure mechanism is preferably actuated by an electric motor, such as a solenoid motor. The closure mechanism may also be actuated manually by moving the rod up or down, respectively.

The liquid handling device may be a hand-held pipette, preferably a hand-held air displacement pipette.

The liquid handling device may be an automated liquid handling robot or station.

The liquid handling device may be a single-channel device or a multi-channel device.

In some embodiments, the present invention provides use of a hollow plunger in an air displacement liquid handling device to function as a fluid connection between two parts of a cavity inside which the plunger is configured to move. Typically, the fluid connection is configured to be closable to reduce the dosing volume range of the liquid handling device.

In an embodiment, at least two volume ranges, for example at least three volume ranges are provided. In a preferred embodiment, exactly two volume ranges are provided.

The volume ranges may be overlapping or non-overlapping.

In the following we describe embodiments with exactly two volume ranges, such as a first volume range and a second volume range.

Typically, the maximum of both volume ranges is not more than 10 000 µl.

In an embodiment, the two volume ranges have the maximums 1000 µl and 5000 µl, or for example 100 µl and 1000 µl, or for example 30 µl and 300 µl, or for example 20 µl and 200 µl, or for example 10 µl and 200 µl, or for example 10 µl and 100 µl, respectively.

In an embodiment, the volume ranges may have the same or substantially the same minimum volume. For example, the volume ranges provided may be 1 - 100 µm and 1 - 1000 µm.

In an embodiment, the volume ranges may have the same or substantially the same maximum volume. For example, the volume ranges provided may be 10 - 1000 µm and 1 - 1000 µm.

FIGURES 1 to 4 illustrate a liquid aspirating and dispensing head or pipette in accordance with an embodiment of the present invention. Two alternative liquid dosing volume ranges are provided. FIGURES 1 to 4 contain similar parts, and the same reference signs apply.

The pipette comprises a plunger 11 movable inside a cavity. When the plunger moves upwards, liquid becomes aspirated to a tip attached to an open lower end 12 of the pipette. The tip is not shown in the Figures. When the plunger moves downwards, the liquid becomes expelled out of the tip. The pipette functions by means of air displacement principle. Thus, there is no direct contact between the plunger and the liquid.

In FIGS. 1 and 2, the plunger 11 is in its lowermost position. In FIGS. 3 and 4, the plunger 11 is in an elevated position.

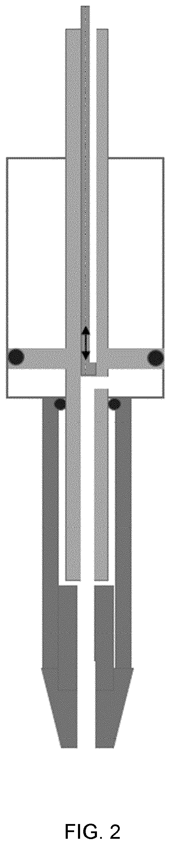

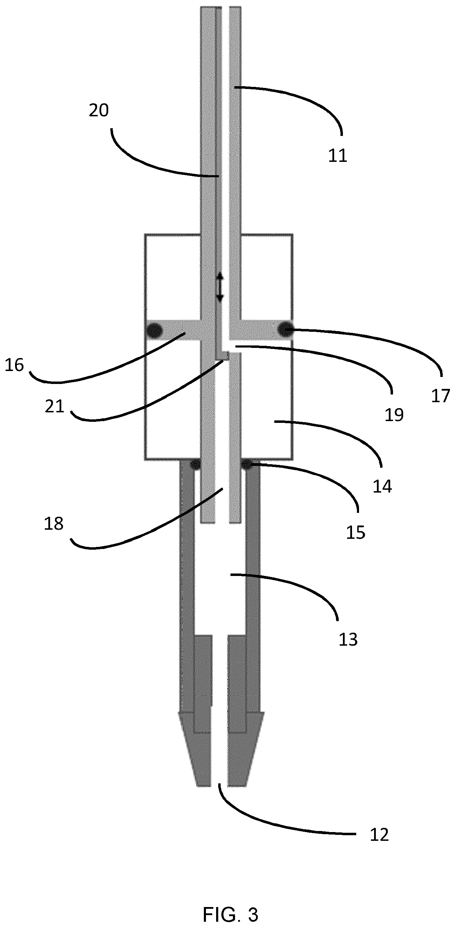

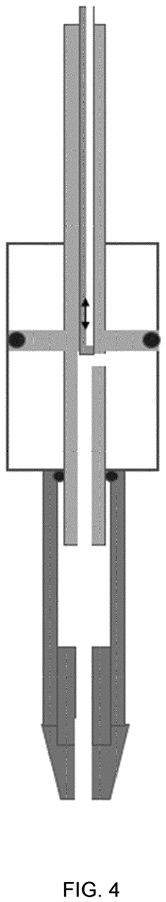

In FIGS. 1 and 3, the smaller volume range is in use. In FIGS. 2 and 4, the larger volume range is in use.

Two alternative volume ranges are provided in the pipette by means of having a two-part cavity comprising two chambers which can be connected by a fluid connection. Typically the chambers can be disconnected from each other by closing the fluid connection.

The first chamber 13, which is the chamber responsible for the smaller volume range, is formed by the lower part of the cavity. The lower part has a cylinder shape. The first chamber is defined by the inner wall of the lower part of the cavity and the plunger.

The second chamber 14, which is used together with the first chamber for providing the larger volume range, is formed by the upper part of the cavity. The upper part also has a cylinder shape but it has a larger diameter than the lower part of the cavity. The lower and upper parts of the cavity can be referred to as the lower cylinder and the upper cylinder. Here, the terms "upper" and "lower" refer to the positions during typical use of the pipette, such as during an aspiration action or a dispensing action.

The plunger 11 is sealed against the inner walls of the cavity, particularly against the inner walls of both the lower cylinder and the upper cylinder.

The Figures show the sealing 15 between the plunger 11 and the inner surface of the lower cylinder 13.

Further, the plunger comprises a flange 16 around its circumference. There is a sealing 17 between the flange 16 and the inner wall of the upper cylinder 14. The second chamber is then defined by the inner wall of the upper part of the cavity and the flange.

In this embodiment, the channel 18 between the two chambers is realized by means of making the plunger 11 hollow. The hollow part of the plunger is connected by a fluid connection (an air connection) to the inside of the upper cylinder by an opening 19 in the plunger's lateral wall.

In this embodiment, the plunger is hollow for its entire length that is located inside the lower and upper cylinders.

The closure mechanism comprises a rod 20 placed and movable up and down within the hollow plunger, in an upper part of the hollow interior of the plunger. The lower end 21 of the rod is sealed against the inner wall of the plunger. The rod is configured to open and close the opening 19 and concomitantly the channel 18 when a larger and respectively a smaller volume range is desired. When the rod is moved downwards inside the plunger, past and below the opening, it closes the connection between the chambers. When the rod is moved upwards inside the plunger, past and above the opening, the fluid connection between the chambers via the hollow plunger and the opening becomes restored or opened.

Hence, in this embodiment, the smaller chamber functions by means of a plunger principle and the larger chamber functions by means of a cylinder principle.

By "plunger principle" it is referred to a configuration in which the volume of displaced air is defined by the volume of the plunger inside the chamber.

By "cylinder principle" it is referred to a configuration in which the volume of displaced air is defined by the volume of the cylinder itself.

Accordingly, in these two configurations the dispensing accuracy is determined by the accuracy of the dimensions of the plunger, and respectively, by the accuracy of the dimensions of the cylinder.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### INDUSTRIAL APPLICABILITY

The present invention is industrially applicable at least in mechanical or electronic hand-held pipettes and in automated liquid dispensing robots.

### REFERENCE SIGNS LIST

- 11: plunger
- 12: open lower end of pipette
- 13: first chamber
- 14: second chamber
- 15: sealing
- 16: flange
- 17: sealing
- 18: channel
- 19: opening
- 20: rod
- 21: lower end of rod

## Claims

1. A liquid handling device based on air displacement principle, comprising
- a cavity comprising a first chamber and a second chamber,
- a plunger movable inside the cavity, to apply a vacuum or pressure inside the cavity,
wherein the first chamber is configured to provide a first dosing volume range or a first dosing volume,
wherein the second chamber together with the first chamber is configured to provide a second dosing volume range or a second dosing volume, which is larger than the first dosing volume range or the first dosing volume, respectively,
wherein said first chamber and said second chamber are connected by a closable fluid connection, and
wherein said fluid connection is provided through said plunger.

2. The liquid handling device according to claim 1, wherein the first dosing volume range or the first dosing volume is configured to be available for use when the fluid connection is closed.

3. The liquid handling device according to any of the preceding claims, wherein the second dosing volume range or the second dosing volume is configured to be available for use when the fluid connection is open.

4. The liquid handling device according to any of the preceding claims, wherein the first chamber and the second chamber are cylinder-shaped.

5. The liquid handling device according to any of the preceding claims, wherein the second chamber has a larger diameter than the first chamber.

6. The liquid handling device according to any of the preceding claims, wherein the plunger is sealed against inner surfaces of the cavity, typically against inner surfaces of both chambers.

7. The liquid handling device according to any of the preceding claims, wherein the plunger is sealed against inner surfaces of the second chamber via a flange arranged around the circumference of the plunger.

8. The liquid handling device according to any of the preceding claims, wherein said plunger is hollow for at least a part of its length, and said hollow part provides said closable fluid connection between the first and the second chamber, or at least a part of said closable fluid connection.

9. The liquid handling device according to any of the preceding claims, wherein at least a part of the length of the plunger, preferably the entire length of the plunger, from its lower end upwards, is hollow.

10. The liquid handling device according to any of the preceding claims, wherein the fluid connection comprises a channel extending inside the plunger from its lower end up to an opening in its lateral wall, as a result of which the plunger is hollow for at least the respective part of its length.

11. The liquid handling device according to any of the preceding claims, comprising a closure mechanism configured to open and close the closable fluid connection, particularly to open and close said opening in the lateral wall of the plunger.

12. The liquid handling device according to any of the preceding claims, wherein the closure mechanism comprises a rod inside the hollow part of the plunger, wherein the rod is movable up and down within the hollow part to open and respectively close the fluid connection.

13. The liquid handling device according to any of the preceding claims, wherein the closure mechanism is actuated by an electric motor, such as a solenoid motor.

14. The liquid handling device according to any of the preceding claims, wherein the liquid handling device is a hand-held pipette, preferably a hand-held air displacement pipette.

15. The liquid handling device according to any of the preceding claims, wherein the liquid handling device is an automated liquid handling station.

16. The liquid handling device according to any of the preceding claims, wherein the liquid handling device is a single-channel or a multi-channel liquid handling device.

17. Use of a hollow plunger in an air displacement liquid handling device to function as a fluid connection between two parts of a cavity inside which the plunger is configured to move, wherein the fluid connection is configured to be closable to reduce the dosing volume range or the dosing volume of the liquid handling device.

18. A liquid handling device, comprising
- a cavity comprising a first chamber and a second chamber, the first chamber having a first volume and the second chamber having a second volume larger than the first volume,
- a plunger configured to move inside the cavity in order to apply a vacuum or a pressure inside said cavity, thereby to aspirate or respectively dispense liquid into/from a tip attached to a lower open end of the cavity,
wherein said first chamber and said second chamber are connected by a closable fluid connection.
